# EUROPEAN PATENT SPECIFICATION

(11) **EP 0 672 341 B1**
(45) Date of publication and mention of the grant of the patent: **26.04.2000**
(21) Application number: 95200065.1
(22) Date of filing: 12.01.1995
(51) Int. Cl.: A01G 5/00

(54) **A device for sorting and bundling flowers**
Vorrichtung zum Sortieren und Zusammenbinden von Blumen
Dispositif pour trier et botteler des fleurs

(30) Priority: 14.01.1994 NL 9400067
(43) Date of publication of application: 20.09.1995
(60) Divisional application: 99200912.6
(73) Proprietor: Janssen, Wilhelmus Henricus Johannes, NL-6049 AJ Herten (NL)
(72) Inventor: Janssen, Wilhelmus Henricus Johannes, NL-6049 AJ Herten (NL)
(74) Representative: Vollebregt, Cornelis Jacobus, Ir.

(56) References cited:
- EP-A- 0 449 386
- EP-A- 0 501 535
- WO-A-91/01628
- DE-B- 1 189 779
- NL-A- 7 310 250
- NL-A- 8 500 245
- NL-A- 9 200 894
- US-A- 3 659 709
- US-A- 3 743 092
- US-A- 4 470 241
- US-A- 4 704 846

## Description

The invention relates to a device for sorting and bundling flowers, said device being provided with a frame and with a conveyor belt provided within said frame, which runs in a substantially horizontal plane during operation and to which supporting means are coupled so as to support the flowers, whereby said supporting means are capable of reciprocating movement in said substantially horizontal plane with respect to the conveyor belt in order to deliver the flowers to one of a number of bundling stations arranged one behind the other.

A device of this type is for example known from European Patent Application No. 0 449 386. With this known device the supporting means are telescopically movable, against the action of springs coupled to the supporting means, with respect to carriers secured to the conveyor belt. Switches and guide plates are thereby provided, which cooperate with cams provided on the supporting means so as to be able to move the supporting means in desired places with respect to the conveyor belt, in a direction away from the conveyor belt. After having passed a guide plate, by means of which a supporting means has been moved with respect to the conveyor belt, the supporting means will be retracted in the direction of the conveyor belt again by the spring connected with the supporting means. This known construction is of intricate design, whilst a great deal of damage may be caused when a supporting means, which has been moved outwards with respect to the conveyor belt, comes into contact another part of the device because of a malfunction of some kind.

A further drawback of this known device is the fact that the supporting means is quickly retracted by the spring after having passed a respective guide plate, as a result of which the supporting means slides roughly past the flower stem and the bottom side of the flower, which may lead to undesirable damage to the flowers.

According to the invention the supporting means for supporting the flowers are coupled to the conveyor belt by means of parallelogram mechanisms, to each of which a control arm is connected, which is capable of cooperation with stops disposed near the bundling stations, each of said stops being adjustable between a first position, in which the respective stop is located in the path of said control arm, and a second position, in which the respective stop is located outside the path of the control arm.

By using the construction according to the invention a device of simple design can be obtained, whereby the mechanism connecting a supporting means with the conveyor belt may be designed such that a spring and possibly buffer for damping a quick retraction movement are not required. Furthermore only little energy is required for moving the supporting means outwards with respect to the conveyor belt, since no springs need to be tensioned. Furthermore the supporting means will be able to pivot back to a position near the conveyor belt without any problem in case it contacts some part of the device when occupying a position moved outwards with respect to the conveyor belt.

With a device of the above kind, whereby a conveyor belt running in a substantially vertical plane is provided near a bundling station, to which a plurality of fork-shaped means being pivotal about horizontal pivot pins are coupled, weights are according to the invention coupled to said pivotal fork-shaped means, in such a manner that said weights attempt to keep said fork-shaped means in a horizontal position.

When using a construction of this type no mechanical guide means are required to keep the fork-shaped means in a horizontal position, which allows a considerably simpler construction of the device according to the invention in comparison with the known devices.

The invention will be explained in more detail hereafter with reference to parts of the device according to the invention, which are diagrammatically illustrated in the accompanying Figures.

Figure 1 is a plan view of a part of a conveyor belt with supporting means for flowers coupled thereto.

Figure 2 is a side view of Figure 1.

Figure 3 is a plan view of the conveyor belt at the location of a pulley for the conveyor belt, near which means are provided for measuring the thickness as well as the length of the stem.

Figure 4 is a side view of Figure 3.

Figure 5 is a plan view of a part of the conveyor belt near a bundling station, where a conveyor belt moving in a substantially vertical plane and supporting fork-shaped means is disposed.

Figure 6 is a side view of an endless conveyor belt with fork-shaped means supported by the conveyor belt.

Figure 7 is a plan view of Figure 6.

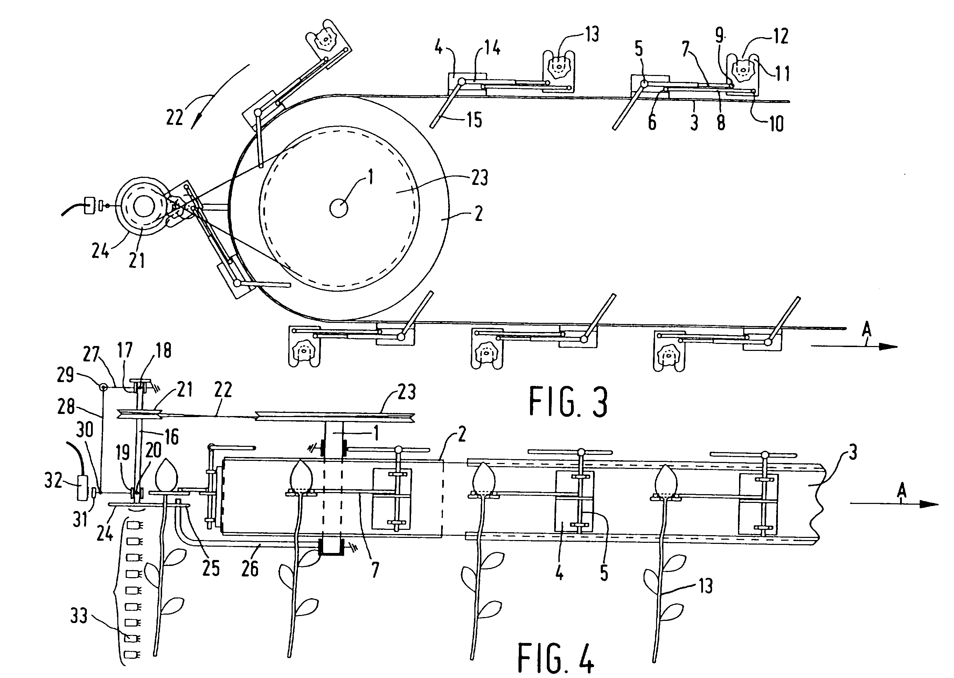

The device for sorting and bundling flowers comprises a frame (not shown), in which a few pulleys 2 are journalled, said pulleys being rotatable about vertical axes of rotation 1 (Figure 3). The pulleys 2 function to guide a conveyor belt 3 which runs in a horizontal plane. The conveyor belt 3 may be a simple smooth belt 3, for example made of plastic material or rubber or the like material, which makes the construction a rather noiseless one.

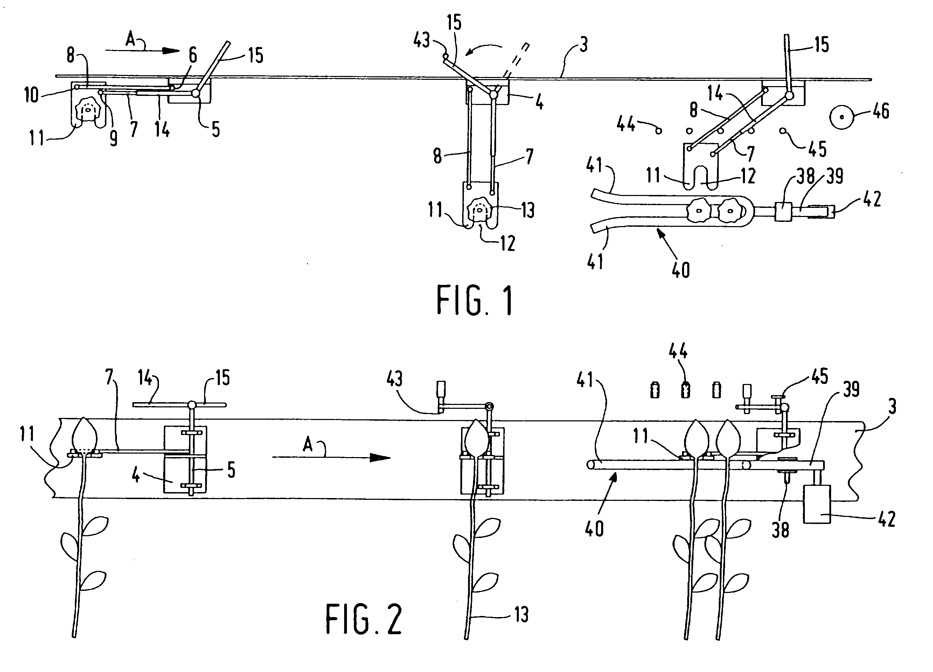

Supports 4 are secured to the conveyor belt in regularly spaced-apart relationship. The ends of two arms 7 and 8 are coupled to the supports 4 by means of vertically extending pivot pins 5 and 6. The ends of the arms 7 and 8 remote from the pivot pins 5 and 6 are coupled to a supporting means 11 by means of pivot pins 9 and 10 respectively extending parallel to the pivot pins 5 and 6, in which supporting means a slotted hole 12 is provided, said slotted hole being open at one end. The pivot pins 5, 6 and 9, 10 are located in the corner points of a parallelogram, as will be apparent in particular from Figures 1 and 3. As will furthermore be apparent in particular from Figures 2 - 4, the supporting means 11 are intended to support flowers 13, whereby every flower 13 can be suspended from a supporting means 11 by hand, by sliding the stem of the flower 13 into the slotted hole 12, in such a manner that the bud of the flower 13 will come to rest on top of the supporting means.

Furthermore two control arms 14 and 15 including an obtuse angle with each other, whose purpose will be explained in more detail hereafter, are secured to each pivot pin 5.

During operation the endless conveyor belt 3 is driven in the direction according to arrow A. During operation the flowers 13 are suspended from the supporting means 11 in a point located upstream of the pulley 2, to those supporting means 11 that are located near the upper part of the conveyor belt 3, seen in Figure 3.

A shaft 16 is provided near the pulley 2, said shaft being disposed at least substantially parallel to the axis of rotation 1 of said pulley 2 and being supported near its upper end by a tiltable journal 17 connected with the frame of the device, in such a manner that the shaft 16 is capable of pivoting movement near said journal 17, about an imaginary horizontal axis 18. Near its bottom end the shaft 16 is furthermore journalled in a tiltable journal 19, in such a manner that also here the shaft 16 is capable of pivoting movement about an imaginary axis 20 with respect to the journal 19.

Pulley 21 is secured to the shaft 16 between the ends of the shaft 16, said pulley 21 being coupled, by means of a crossed belt 22, to a pulley 23 secured to shaft 1, which rotates along with the pulley 2 during operation, therefore.

A pulley 24 is secured to the bottom end of the shaft 16. A further pulley 25, which is rotatable about an upwardly extending axis of rotation, is disposed in one plane with the pulley 24, said pulley 25 being supported by an arm 26 secured to the frame.

It will be apparent that the pulley 24 is pulled towards the pulley 25 by the belt 22.

Projecting arms 27 are secured to the journals 17 and 19. A connecting means 28 is coupled between the ends of the arms 27 remote from the journals 17 and 19, said connecting means being capable of pivoting movement with respect to the arms 27, about axes 29 and 30 extending parallel to the axes 18 and 20, which, together with the axes 18 and 20, are located in the corner points of a parallelogram.

A measuring vane 31 is secured to the bottom end of the lower arm 27, said measuring vane being located opposite a sensor 32 fixed to the frame.

During transport of the flowers supported by the supporting means 11 the stems of the flowers will move between the two pulleys 24 and 25 lying in one plane, as a result of which the pulley 24 will be pushed some distance away from the pulley 25, dependent on the thickness of the stem. It will be apparent that as a result of this also the distance between the measuring vane 31 and the sensor 32 will be changed, as a result of which the sensor will deliver a signal in accordance with the thickness of the stem.

Furthermore a number of sensors 33 are provided near the pulley 2, one sensor being located above the other, by means of which the length of the stem of a flower 13 is measured in a manner which is known per se. The measured thickness and/or length of the stem is used to programme a control mechanism of the device in such a manner, that each flower is delivered in a desired bundling station of a plurality of bundling stations arranged one behind the other along the conveyor belt 3, downstream of the pulley 2.

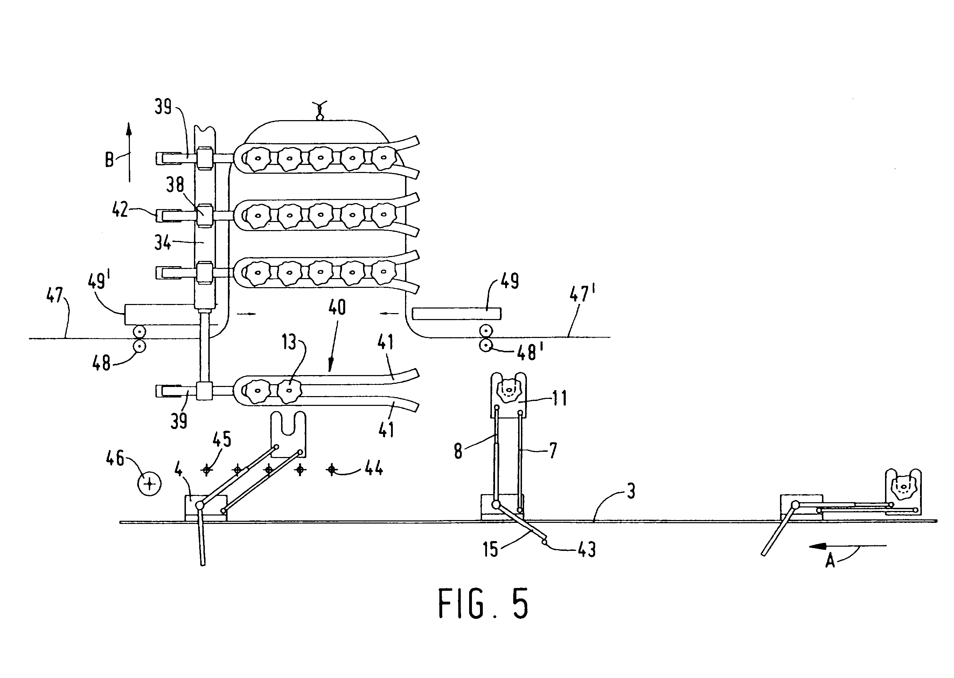

As is illustrated in particular in Figures 5 - 7, an endless conveyor belt 34 running in a vertical plane is disposed at each bundling station, said conveyor belt being passed over two pulleys 35, which are rotatable about horizontal axes 36. The axes 36 extend at least substantially parallel to the longitudinal direction of the conveyor belt 3, whereby the conveyor belt 34 extends perpendicularly to the longitudinal direction of the conveyor belt 3.

Regularly spaced-apart carriers 38 are secured to the conveyor belt 34. Horizontal axes 39 extending parallel to the pins 36 are journalled, in such manner as to be freely rotatable, in the ends of the carriers remote from the conveyor belt 34. A fork-shaped means 40 is secured to one end of each axis 39, said fork-shaped means being built up of two teeth 41 extending parallel to each other, whereby the free ends of said teeth remote from the pin 39 are slightly bent in a direction away from each other.

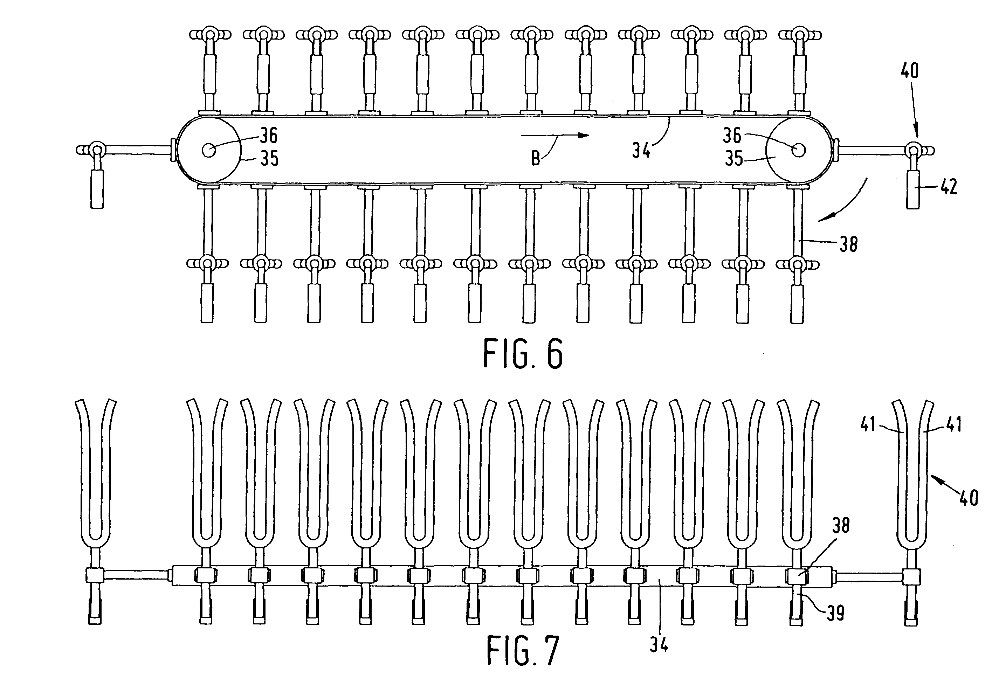

A weight 42 is secured to the other end of each axis 39. During operation the conveyor belt 34 will be driven in such a manner, that the upper part of the conveyor belt moves in a direction according to arrow B, seen in Figure 6. It will be apparent that when the movement of the fork-shaped means 40 effected as a result of the endless conveyor belt 34 being driven takes place, said fork-shaped means 40 will be kept in the horizontal position shown in Figure 6 at all times by the weights 42 secured to the axes 39, which project under the axes 39.

A vertically adjustable stop or sorting pin 43 (Figure 2) is disposed some distance upstream of each conveyor belt 34 forming part of a bundling station, seen in the direction of movement of the endless conveyor belt 3 in the direction according to arrow A. The sorting pin 43 is thereby adjustable between a first position shown in Figure 2, in which the sorting pin lies in the path of the control arm 15, and a second position, in which the sorting pin 43 lies outside the path of the control arm 15.

Furthermore a number of further vertically adjustable stops or sorting pins 44, four in the illustrated embodiment, are arranged in regularly spaced-apart relationship near each conveyor belt 34, close to the conveyor belt 3. Furthermore a fixedly disposed sorting pint 45 is provided downstream of said four vertically adjustable sorting pins 44. The distance between said sorting pin 45 and the sorting pin 44 located closest to said sorting pin 45 is equal to the distance between the sorting pins 44 mutually.

Furthermore a guide wheel 46 is disposed some distance downstream of the fixedly disposed sorting pin 45.

When a flower being displaced by means of the conveyor belt 3 is to be delivered in a certain bundling station, the sorting pin 43 or stop associated with said bundling station will be moved by means of the control mechanism of the device, from a position located outside the path of the control arm 15 to the position shown in Figure 2, which is located in the path of the control arm 15. Consequently the control arm 15 will strike the respective sorting pin 43 and be pivoted by means of the sorting pin 43, from the position illustrated in dotted lines in the centre of Figure 1 to the position shown in full lines in the present Figure. As a result of this the supporting means carrying the flower in question will be pivoted by means of the parallelogram mechanism 5 - 10, from a position in which the supporting means is located close by the conveyor belt 3 to a position in which the supporting means is located some distance from the conveyor belt 1, whilst the arms 7 and 8 thereby extend at least substantially perpendicularly to the conveyor belt 3 (Figure 1).

The flower 13 supported by a supporting means 11 thus extended is then moved in a path being in line with the opening between the legs 41 of a fork-shaped means 40 located nearest the conveyor belt 3, approximately in a plane through the two axes 36 of the endless conveyor belt 34, therefore, as is illustrated in Figure 6.

As appears in particular from the right-hand part of Figure 2, the supporting means 11 is initially moved over the legs 41 of the respective fork-shaped means 40 thereby, so that the stem of the flower 13 in question is moved into the slot-shaped opening bounded by the legs 41 of the fork-shaped supporting means.

When it concerns a first flower placed in the respective fork-shaped supporting means, all pins 44 will have been kept in a retracted position, so that said pins will not be located in the path of movement of the control arm 14. At some point the control arm will come into contact with the fixed stop 45, which will result in some pivoting of the parallelogram mechanism supporting the supporting means 11, all this in such a manner, that the supporting means is pulled away from its position under the respective flower and the flower will come to rest on the legs 41 of the fork-shaped supporting means 40.

Then the control arm 14 will come into contact with the guide wheel 46, by means of which the arms 7 and 8 of the parallelogram mechanism supporting the supporting means 11 are caused to pivot back against the direction of movement of the conveyor belt 3, to a position in which the arms 7 and 8 extend at least substantially parallel to the longitudinal direction of the conveyor belt.

When a next flower is to be delivered to the fork-shaped supporting means 40, the above-described action will be practically identical, with this difference that in that case the sorting pin 44 located nearest the fixedly disposed stop pin 45 is moved to a position, in which said sorting pin 44 is located in the path of movement of the control arm 14 so that the supporting means 11 in question, which supports the second flower, will be retracted from the position located above the fork-shaped means 40 sooner than the supporting means that placed the first flower in the fork-shaped means 40. This goes on until five flowers (or more or fewer, if desired) have been placed in the fork-shaped means 40.

In practice it has become apparent that no springs or the like are required to keep the parallelogram mechanism supporting the supporting means 11 in the one or other desired position.

Since the parallelogram mechanism is furthermore designed such that the arms can be pivoted from the extended position of the supporting means 11 with respect to the belt, in a direction opposed to the direction of movement of the belt during operation, the supporting means will be able to move out easily when said supporting means comes into contact with an obstacle of some kind, so that the risk of jamming and/or damage being caused to parts of the machine is prevented.

When a desired number of flowers has been delivered to a fork-shaped means, the conveyor belt 34 will be moved one step in the direction according to arrow B, so that the fork-shaped means loaded with flowers will be moved out of the path of movement of flowers supported by extended supporting means 11, and an empty fork-shaped means is positioned in said path of movement so as to be filled with flowers again.

## Claims

1. A device for sorting and bundling flowers (13), said device being provided with a frame and with a conveyor belt (3) provided within said frame, which runs in a substantially horizontal plane during operation and to which supporting means (11) are coupled adapted to support the flowers (13), whereby said supporting means (11) are capable of reciprocating movement in said substantially horizontal plane with respect to the conveyor belt (3) in order to deliver the flowers (13) to one of a number of bundling stations arranged one behind the other, characterized in that the supporting means (11) for supporting the flowers (13) are coupled to the conveyor belt (3) by means of parallelogram mechanisms (5-10), to each of which a control arm (14) is connected, which is capable of cooperation with stops (44) disposed near the bundling stations, each of said stops (44) being adjustable between a first position, in which the respective stop (44) is located in the path of said control arm (14), and a second position, in which the respective stop (44) is located outside the path of the control arm (14).

2. A device according to claim 1, characterized in that further adjustable stops (44) are provided near each bundling station, which stops (44) can be successively moved into the path of the control arm (14) connected with the parallelogram mechanism (5-10).

3. A device according to claim 2, characterized in that a fixedly disposed stop (45) is provided downstream of said further adjustable stops (44), seen in the direction of movement (A) of the flowers (13) during operation.

4. A device according to any one of the preceding claims, characterized in that a fixedly disposed guide means (46) is provided downstream of the point where flowers (13) are delivered to a bundling station, by means of which a parallelogram mechanism (5-10) can be returned to a position near the conveyor belt (3).

5. A device according to any one of the preceding claims, characterized in that a substantially vertically extending, pivot-mounted shaft (16) is provided near a pulley (2) of the conveyor belt (3) which is driven from said pulley (2) and which supports a measuring wheel (24), which cooperates with a further measuring wheel (25), whereby said measuring wheels (24,25) are arranged in such a manner, that the stems of the flowers (13) being moved by the conveyor belt (3) pass between said two measuring wheels (24,25), whilst a measuring vane (31) is coupled to the pivot-mounted shaft (16), which measuring vane (31) cooperates with a sensor (32) which is fixedly disposed with respect to the frame, so as to measure the thickness of the stems.

6. A device according to claim 5, characterized in that said pivot-mounted shaft (16) is driven by a belt or a rope (22), which engages said shaft (16) in such a manner that the measuring wheel (24) supported by said shaft (16) is pulled towards the other measuring wheel (25) by means of said belt or rope (22).

7. A device according to any one of the preceding claims, characterized in that the supporting means (11) for the flowers can be pivoted from their position for delivering the flowers (13) in a bundling station by means of parallelogram mechanisms (5-10), against the direction of movement of the conveyor belt.

8. A device according to any one of the preceding claims, whereby a further conveyor belt (34) running in a substantially vertical plane is provided near a bundling station, to which a plurality of fork-shaped means (40) being pivotal about horizontal pivot pins (39) are coupled, characterized in that weights (42) are coupled to said pivotal fork-shaped means (40), in such a manner that said weights (42) attempt to keep said fork-shaped means (40) in a horizontal position.

## Patentansprüche

1. Vorrichtung zum Sortieren und Binden von Blumen (13), ausgestattet mit einem Gestell und einem Förderband (3) innerhalb des Gestells, welches während des Betriebs in einer im wesentlichen horizontalen Ebene läuft, und an die Haltemittel (11) gekoppelt sind, die zum Halten der Blumen (13) ausgebildet sind, wobei die Haltemittel (11) eine hin- und hergehende Bewegung in der im wesentlichen horizontalen Ebene in Bezug auf das Förderband (3) ausführen können, um die Blumen (13) einer aus einer Anzahl von hintereinander angeordneten Bindestationen zuzuführen, **dadurch gekennzeichnet,** daß die Haltemittel (11) zum Halten der Blumen (13) mit dem Förderband (3) über einen Parallelogramm-Mechanismus (5-10) gekoppelt sind, mit dem jeweils ein Steuerarm (14) verbunden ist, der mit in der Nähe der Bindestationen angeordneten Anschlägen (44) zusammenwirken kann, wobei jeder der Anschläge (44) einstellbar ist zwischen einer ersten Stellung, in der der zugehörige Anschlag (44) sich in der Bahn des Steuerarms (14) befindet, und einer zweiten Stellung, in der der betreffende Anschlag (44) sich außerhalb der Bahn des Steuerarms (14) befindet.

2. Vorrichtung nach Anspruch 1, **dadurch gekennzeichnet,** daß mehrere einstellbare Anschläge (44) in der Nähe jeder Bindestation vorgesehen sind, wobei die Anschläge (44) sukzessive in die Bahn des an den Parallelogramm-Mechanismus (5-10) angeschlossenen Steuerarms (14) bewegbar sind.

3. Vorrichtung nach Anspruch 2, **dadurch gekennzeichnet,** daß stromabwärts bezüglich der weiteren einstellbaren Anschläge (44), betrachtet in Richtung der Bewegung (A) der Blumen (13) während des Betriebs, ein fest angeordneter Anschlag (45) vorgesehen ist.

4. Vorrichtung nach einem der vorhergehenden Ansprüche, **dadurch gekennzeichnet,** daß stromabwärts bezüglich des Punkts, an dem Blumen (13) einer Bindestation aufgegeben werden, eine fest angeordnete Führungseinrichtung (46) vorgesehen ist, mit deren Hilfe ein Parallelogramm-Mechanismus (5-10) in eine Stellung in der Nähe des Förderbands (3) zurückgestellt werden kann.

5. Vorrichtung nach einem der vorhergehenden Ansprüche, **dadurch gekennzeichnet,** daß in der Nähe einer Riemenscheibe (2) des Förderbands (3) eine sich im wesentlichen vertikal erstreckende, drehbar gelagerte Welle (16) vorgesehen ist, die von der Riemenscheibe (2) angetrieben wird, und die ein Meßrad (24) trägt, welches mit einem weiteren Meßrad (25) zusammenwirkt, wobei die Meßräder (24, 25) in der Weise angeordnet sind, daß die Stiele von durch das Förderband (3) bewegten Blumen (13) zwischen den beiden Meßrädern (24, 25) hindurchlaufen, während ein Meßflügel (31) an die drehbar gelagerte Welle (16) gekoppelt ist, welcher Meßflügel (31) mit einem Sensor (32) zusammenwirkt, der in Bezug auf das Gestell ortsfest angeordnet ist, um die Dicke der Stiele zu messen.

6. Vorrichtung nach Anspruch 5, **dadurch gekennzeichnet,** daß die drehbar gelagerte Welle (16) von einem Riemen oder einem Seil (22) angetrieben wird, welches mit der Welle (16) derart zusammenwirkt, daß das von der Welle (16) getragene Meßrad (24) mit Hilfe des Riemens oder des Seils (22) in Richtung des anderen Meßrads (25) gezogen wird.

7. Vorrichtung nach einem der vorhergehenden Ansprüche, **dadurch gekennzeichnet,** daß die Haltemittel (11) für die Blumen aus ihrer Stellung zum Einbringen der Blumen (13) in eine Bindestation mit Hilfe von Parallelogramm-Mechanismen (5-10) gegen die Bewegungsrichtung des Transportbands verschwenkt werden kann.

8. Vorrichtung nach einem der vorhergehenden Ansprüche, bei der ein weiteres Förderband (34) in einer im wesentlichen vertikalen Ebene verlaufend in der Nähe einer Bindestation angeordnet ist, mit welchem mehrere gabelförmige Elemente (40) schwenkbar um horizontale Schwenkzapfen (39) gekoppelt sind, **dadurch gekennzeichnet,** daß mit den schwenkbaren gabelförmigen Elementen (40) Gewichte (42) in der Weise gekoppelt sind, daß die Gewichte (42) trachten, die gabelförmigen Elemente (40) in einer horizontalen Stellung zu halten.

## Revendications

1. Dispositif pour trier et botteler des fleurs (13), ledit dispositif étant doté d'un châssis et d'une bande transporteuse (3) située au sein dudit châssis, qui s'étend dans un plan sensiblement horizontal durant le fonctionnement et à laquelle des moyens de support (11) sont couplés, adaptés à supporter les fleurs (13), de manière que lesdits moyens de support (11) soient capables d'un mouvement alternatif dans ledit plan sensiblement horizontal relativement à la bande transporteuse (3) afin de distribuer les fleurs (13) à l'une d'un nombre de stations de bottelage agencées les unes derrière les autres, caractérisé en ce que les moyens de support (11) pour supporter les fleurs (13) sont couplés à la bande transporteuse (3) au moyen de mécanismes en parallélogramme (5-10), à chacun desquels est relié un bras de commande (14), qui est adapté à coopérer avec des arrêts (44) disposés près des stations de bottelage, chacun desdits arrêts (44) étant réglable entre une première position, dans laquelle l'arrêt respectif (44) est situé sur la trajectoire dudit bras de commande (14), et une deuxième position, dans laquelle l'arrêt respectif (44) est situé hors de la trajectoire du bras de commande (14).

2. Dispositif selon la revendication 1, caractérisé en ce que des arrêts réglables (44) supplémentaires sont prévus près de chaque station de bottelage, lesquels arrêts (44) peuvent être successivement déplacés sur la trajectoire du bras de commande (14) relié avec le mécanisme en parallélogramme (5-10).

3. Dispositif selon la revendication 2, caractérisé en ce qu'un arrêt disposé fixement (45) est prévu en aval desdits arrêts réglables supplémentaires (44), vu dans la direction de déplacement (A) des fleurs (13) durant le fonctionnement.

4. Dispositif selon l'une quelconque des revendications précédentes, caractérisé en ce qu'un moyen de guidage disposé fixement (46) est prévu en aval du point où les fleurs (13) sont distribuées à une station de bottelage, au moyen duquel un mécanisme en parallélogramme (5-10) peut être ramené dans une position près de la bande transporteuse (3).

5. Dispositif selon l'une quelconque des revendications précédentes, caractérisé en ce qu'un arbre monté sur pivot (16), s'étendant sensiblement verticalement, est prévu près d'une poulie (2) de la bande transporteuse (3), qui est entraînée depuis ladite poulie (2), et qui supporte une roue de mesure (24), qui coopère avec une roue de mesure supplémentaire (25), de manière que lesdites roues de mesure (24, 25) soient agencées de manière que les tiges des fleurs (13) étant déplacées par la bande transporteuse (3) passent entre lesdites deux roues de mesure (24, 25), tandis qu'une ailette de mesure (31) est couplée à l'arbre monté sur pivot (16), laquelle ailette de mesure (31) coopère avec un capteur (32) qui est disposé fixement par rapport au châssis, afin de mesurer l'épaisseur des tiges.

6. Dispositif selon la revendication 5, caractérisé en ce que ledit arbre monté sur pivot (16) est entraîné par une courroie ou un câble (22), qui engage ledit arbre (16) de manière que la roue de mesure (24) supportée par ledit arbre (16) soit tirée vers l'autre roue de mesure (25) au moyen de ladite courroie ou dudit câble (22).

7. Dispositif selon l'une quelconque des revendications précédentes, caractérisé en ce que les moyens de support (11) pour les fleurs (13) peuvent être amenés à pivoter depuis leur position pour distribuer les fleurs (13) dans une station de bottelage au moyen de mécanismes en parallélogramme (5-10), à l'encontre de la direction de déplacement de la bande transporteuse.

8. Dispositif selon l'une quelconque des revendications précédentes, de manière qu'une bande transporteuse supplémentaire (34) s'étendant dans un plan sensiblement vertical soit prévue près d'une station de bottelage, à laquelle une pluralité de moyens en forme de fourche (40) étant adaptés à pivoter autour de pivots horizontaux (39) sont couplés, caractérisé en ce que des poids (42) sont couplés auxdits moyens en forme de fourche pivotants (40), de manière que lesdits poids (42) aident à garder lesdits moyens en forme de fourche (40) dans une position horizontale.
